Europäisches Patentamt

European Patent Office

Office européen des brevets

(19)

(11) Publication number: **0 040 989**
A2

## EUROPEAN PATENT APPLICATION

(12)

(21) Application number: 81302334.8

(22) Date of filing: 27.05.81

(51) Int. Cl.³: **A 23 G 9/26, A 23 G 9/22, A 23 G 3/02, A 23 G 3/28**

(30) Priority: 27.05.80 GB 8017333
02.07.80 GB 8021690

(43) Date of publication of application: 02.12.81
Bulletin 81/48

(84) Designated Contracting States: AT BE CH DE FR GB IT LI LU NL SE

(71) Applicant: UNILEVER PLC, Unilever House Blackfriars, London EC4 (GB)

(84) Designated Contracting States: GB

(71) Applicant: UNILEVER NV, Burgemeester 's Jacobplein 1, NL-3000 DK Rotterdam (NL)

(84) Designated Contracting States: BE CH DE FR IT LI LU NL SE AT

(72) Inventor: Baker, Terence Paul, 6 Swallow Drive, Rushden Northamptonshire (GB)
Inventor: Biggs, Donald Reginald, 33 Tyne Crescent, Bedford (GB)
Inventor: Fletcher, Reginald John, 37 Upper Lees, Westhoughton Lancashire (GB)
Inventor: Ward, Anthony Bernard, 5 Link Road, Rushden Northamptonshire (GB)

(74) Representative: Stancliffe, Terence Christopher et al, Unilever PLC, Patent Division PO Box 31 Salisbury Square House Salisbury Square, London EC4 4AN (GB)

(54) Moulded edible products and method and apparatus for making them.

(57) Edible products such as ice lollies are reshaped into decorative contoured shapes, by pressure and re-shaping of preformed blanks, in box moulds which have contoured mould parts slidable within also-contoured rim walls, edible stick products being accomodated by slidable rim wall portions slotted to receive the stick and to avoid stick breakage.

EP 0 040 989 A2

- 1 -                                      Q.1031

## MOULDED EDIBLE PRODUCTS AND METHOD
## AND APPARATUS FOR MAKING THEM

This invention relates to moulded edible products and to methods and apparatus for making them.   In particular it relates to moulding methods and apparatus which are suitable for example for the production of moulded ice confections, such as water ices, and to the products thereof.

Among the ice confections which can be produced by known methods are those with complex or decorated surface relief features, e.g. of designs showing figuring or moulding, which make it impossible for the confections to be moulded and then withdrawn from a metal mould, e.g. by a stick or gripper device, on account of the manner of shaping leading to negative draft angles.   This is discussed for example in GB Specification 1,508,589, which discloses a method using flexible moulds.

Methods for shaping ice confectionery by tooling and/or pressure forming a preformed blank have been known for a long time.

See for example US Patent No. 2,173,850, which describes preparation of frozen confection material in irregular shapes, with or without sticks or handles, by placing a block of frozen confection between movable mould sections of suitable configuration to give the desired shape to the product, then forcing

0040989
Q.1031

the mould sections together.

GB Specification No. 831,028 describes machinery and processes for producing an indented (embossed) pattern on the surface of ice cream confectionery.

GB Specifications Nos. 2,005,124-5 describe the decoration of ice lollies, the latter number showing the application of (heated) stamping tools to preformed ice confections. Other Other preparations of frozen confectionery are shown for example in US Patent No. 2,666,400, GB Patent Specification No. 712,909, and GB Patent Specification No. 983,575.

According to this invention there is provided a box mould suitable for reshaping a water ice confection article, e.g. a blank not possessing complex features of shape, into a shaped article having complex relief features according to the shape of the mould.

The invention also embraces the use of box-moulds in the production of edible products made by solidification of fluid or plastic material by:

    (i)  bring a fluid or plastic edible material to form a solid or substantially solid blank (which need not be of protruding or re-entrant shape (as defined above)), transferring the blank to a forming station along the production line of an ice confection producing apparatus, and afterwards

    (ii)  pressing at least one mould part on to the blank, thereby to embrace the blank so as to distort it and form a product which does have a desired protruding or re-entrant shape (as defined above).

Corresponding apparatus according to the present invention accordingly comprises ice confection producing apparatus having a production line with a forming station and means for transferring a blank which has been formed from fluid or plastic edible material brought to a solid or substantially solid form which need not be of said protruding or re-entrant shape to the said forming station, and a moulding tool arranged for subsequent application with pressure to the blank to embrace the blank and to distort it and form from it a product of the protruding or re-entrant shape desired.

We find that apparatus and processes having the arrangement described above, according to the invention, can be set up to provide a convenient route to the preparation of many kinds of complex-shaped edible products, for example frozen products such as ice lollies and ice creams of ridged, grooved, bowed, sculpted, or figured appearances as may be desired.

The shaped mould part (or for example pair of complementary mould parts) is arranged to impart the desired shape to the product by mechanical working. Although such mechanical working can be accompanied by local melting of the solid or substantially solid material to be given a protruding or re-entrant shape in accordance with the invention, the main shaping probably occurs by plastic deformation. If desired the tool can incorporate heating means or be heated in any convenient way, e.g. by an electric heating element within it.

The box mould used in the present invention, forming part of the apparatus, can for example have a rim wall and two opposing mould pieces, at least one of which is slidable towards and away from the other within the rim wall, so as to enable pressure to be exerted on the mould contents between them.

According to a particularly useful example of the invention, the box mould used has a rim wall with a portion bearing an aperture, such as a slot, which wall portion is movable with respect to the remainder of the rim wall in the same axial directions as those along which the opposing mould piece or pieces are slidable towards and away from each other. This embodiment enables an ice confection blank bearing a stick or handle to be placed within the mould with the stick or handle extending through the aperture, which can then be of complementary shape. When the blank is reshaped by pressure in the mould by compression between the opposing mould parts, the wall portion bearing the aperture can then move slightly under

0040989
Q.1031

pressure so that there is reduced risk of breaking the stick or handle of the ice confection.

Each pressure tool or pressure tool portion used in the box mould can either have a contact surface of desired shape for working the edible product as described above, or it can have an exchangeable insert of any of a number of desired shapes so that articles of different shapes can conveniently be produced from a single apparatus merely by exchanging the pressure tool inserts. If desired, a two-stage or multi-stage pressure tooling can be given to the edible products in an apparatus in which operations are carried out sequentially on the products as they travel along a line, a first tooling being arranged to impart finer details or shape which may finish the product.

Ice lollies of solid-frozen ice material and complex shape are among the products accessible to manufacture by the use of the invention.

Slush-frozen products and ice creams of complex shape can conveniently be made by a tooling process in which the applied moulding tool brings about plastic flow of a slush-frozen or ice cream blank to impart a desired shape to it.

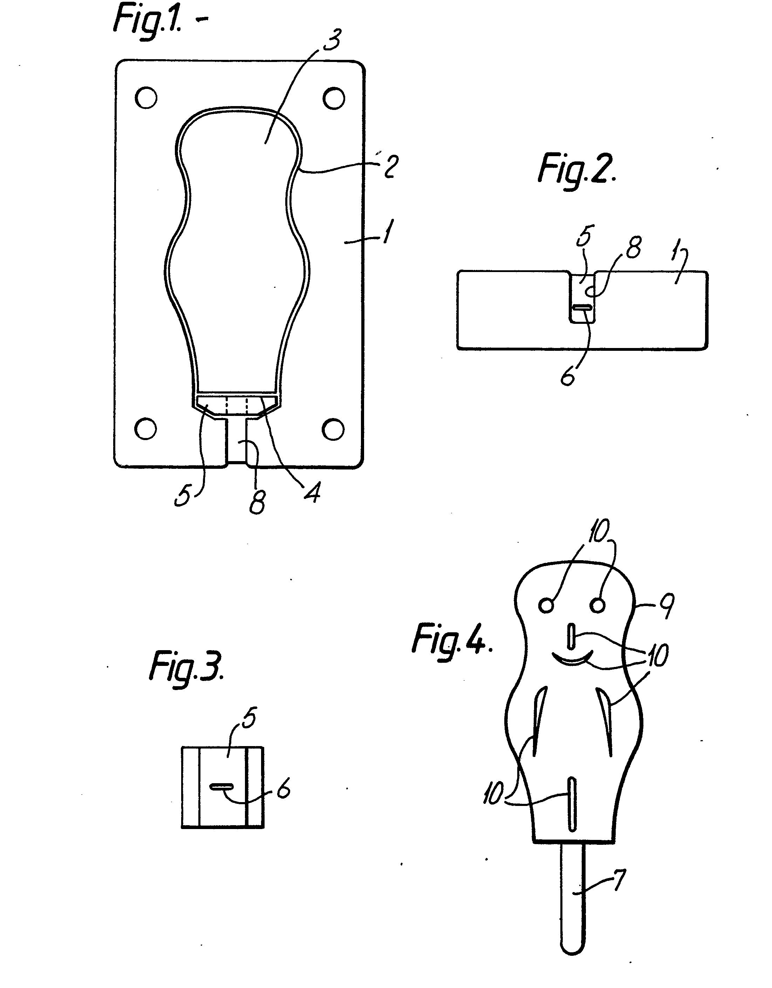

The accompanying diagrammatic drawings, Figures 1 to 10, illustrate particular preferred embodiments of the invention by way of example only. Figure 1 shows a box mould according to an embodiment of the invention, in plan. Figure 2 shows the box mould of Figure 1, in end elevation. Figure 3 shows an apertured movable rim wall piece of the box mould of Figures 1 and 2. Figure 4 shows an ice confection on a stick and having relief features, as produced according to an embodiment of the invention by means of the box mould of Figures 1-3.

Figures 5 and 6 are diagrammatic part-cross-sectional side and transverse views of a 7-lane lolly-reshaping station incorporated in a lolly-manufacturing machine of otherwise conventional type.

Figure 7 is a sectional diagram showing a vertical section through a lolly-reshaping bottom mould die of each lane of the station of Figures 5 and 6.

Figures 8, 9 and 10 are fragmentary vertical sections through one lane of the lolly reshaping station of Figures 5 and 6 illustrating stages of its operation.

Referring to the drawings, Figure 1 shows in plan a box mould of which the parts, to be described below, are in stainless steel. Casing block 1 has an internal rim wall 2 along which a first mould piece 3 and an opposing second mould piece (not visible in Figure 1 below mould piece 3) are slidable transversely to the plane of the paper, and telescopically within casing 1. One or other mould piece can, if desired, be made integral or fixed to casing 1 or else both can be slidable.

The mutually opposing faces of the mould pieces have features of relief formed upon them corresponding to a desired shape to be produced and, together with the internal rim wall 2 of casing 1 and an inward-facing wall 4 of a movable mould rim wall piece 5 (which is slidable in casing 1 transversely to the plan of the paper), form the internal surface of the box mould cavity. Casing 1 and movable piece 5 are also shown in Figures 2 and 3: movable mould rim wall piece 5 has an aperture 6 in the form of a slot shaped to fit slidingly around a conventional ice lolly wooden stick (7 in Figure 4). Casing 1 has a slot 8 to accommodate a stick 7 extending through slot 6 and to allow it to move freely when wall piece 5 slides slightly in casing 1.

In use, an ice lolly blank, e.g. of rectangular form, with a stick, is placed in the box mould and compressed to form a shaped product 9 as seen in Figure 4 in diagrammatic plan. Indentations 10 in product 9, shown by way of example, forming with corresponding projections any desired design of relief on product 9, are complementary to mould formations on the inner face of sliding mould part 3, and also, where desired, the opposing mould part (not shown). It is apparent that the product of Figure 4 could not be formed in an enclosing mould and withdrawn therefrom.

It has been found that the above-mentioned method and apparatus are suitable for forming shaped water ices from water ice blanks: such water ices are normally too hard to be reshaped by moulding. It may be necessary or convenient to apply moulding pressures for example in the range 60 to 100 Bar at $-10^{\circ}C$ when the water ice confections contain for example about 10% sugar by weight. Where the sugar concentration is higher, e.g. about 20% by weight, lower pressures can more often be chosen, e.g. about 30-45 Bar, and where the sugar concentration is especially high, e.g. about 30% by weight, it can be convenient to reshape using lower pressures, e.g. about 5 Bar. Where the ice confection is not solid but contains appreciable aeration lower reshaping pressures may suffice. The pressure can be applied by rapid impact or by slowly increasing compression.

Moulding apparatus and methods as described herein are also applicable to the reshaping of other confections including other frozen confections.

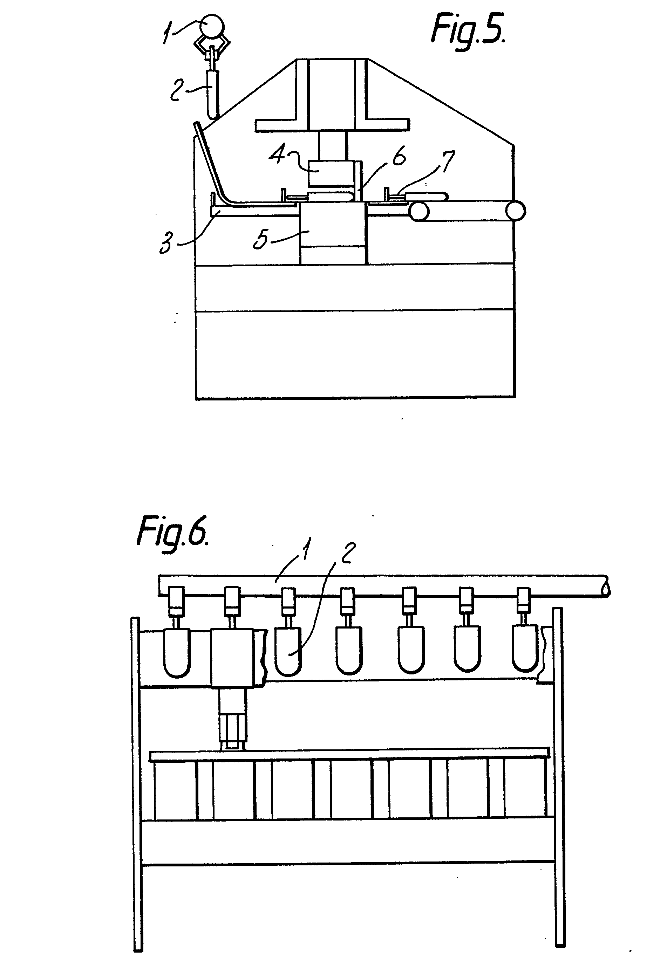

Referring to the drawings, Figures 5 and 6 show a side and transverse part-sectional diagrammatic view of a lolly-reshaping station incorporated in a lolly-manufacturing machine, which can be of the rotary freezer type: as illustrated, seven lanes are provided. A gripper bar 1 has grippers for seven ice lollies (of which one is shown at 2) held by their sticks: bar 1 is mounted and arranged for sequential pick-up and release of a set of lollies as will be described below. A transport arrangement 3 is arranged to feed lollies from bar 1 to a moulding-reforming location provided with moulding tools 4, 5 and a removable positioning stop 6. A conveyor arrangement 7 is provided at the other side of the moulding location for carrying away reshaped lollies.

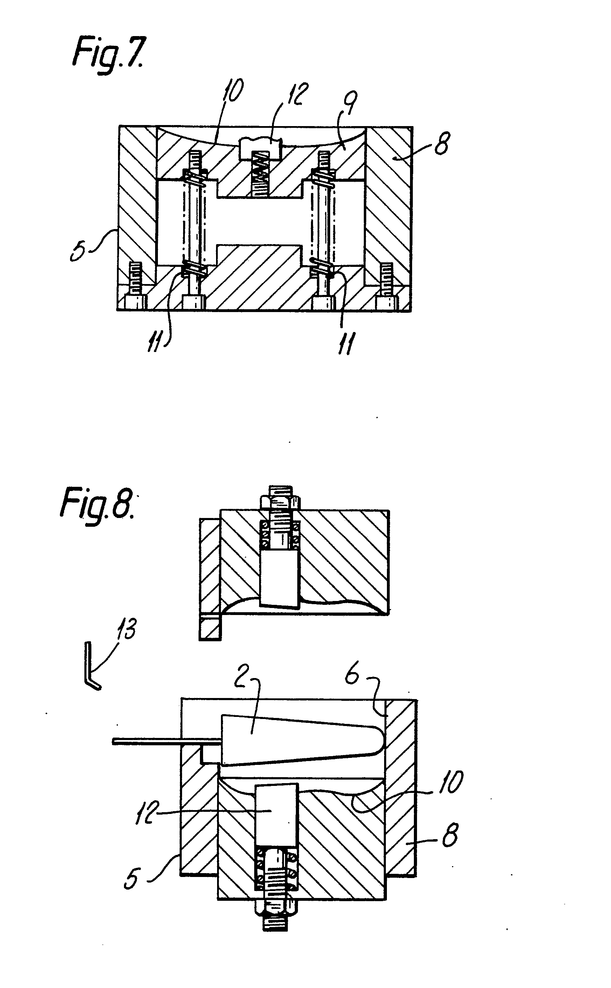

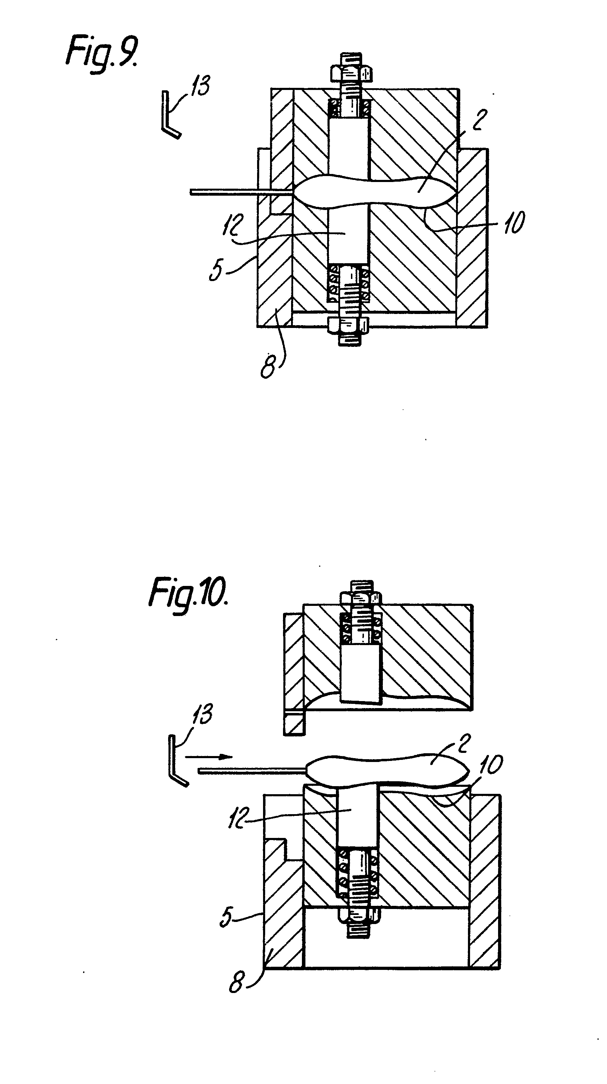

Moulding tools 4 and 5 are shown in greater detail together with their action in Figures 7-10. Figure 7 shows a sectional view of lower moulding tool 5, which has a casing
and a tooling member 9 slidable therein.   Tooling member 9
has a surface 10 which is of a size and shape to embrace
and reshape a substantial part, i.e. in this case about a
half, of an entire lolly 2 and impress upon it a moulded
complementary shape.   Tooling member 9 is upwardly biased by
springs 11 and a small part of its surface 10 has an inlaid
slidable upwardly spring biased ejector member 12.
Corresponding arrangements are present in the upper moulding
tool 4.   Figures 8-10 show parts of an equivalent pair of
moulding tools 4 and 5 in succeeding stages of operation.

The gripper bar 1 releases the lolly (for each lane) to
the transport mechanism 3 which delivers the blank lolly to
sit upon the upper surface 10 of lower moulding tool 5.
Moulding tools 4 and 5 are then clamped together, depressing
the lightly sprung ejector members such as 12 to a stop
position and reshaping the lolly 2 according to the form of
surfaces 10.   Moulding tools 4 and 5 are then separated
and ejector members 12 then separate the lolly from the
mould surfaces 10.   Stop 6 is retracted (or if as in Figures
7-10 it forms part of mould tool casing 8 the tooling member
can be correspondingly raised) and a pusher bar 13 ejects
the reshaped lolly to the conveyor arrangement 7.

Using this apparatus and method a wide variety of
sculpted shapes with negative draft angles and protruding or
recessed portions can be produced: such products are
inaccessible to manufacture by normal machinery.

A particularly convenient embodiment of apparatus
according to this invention can be made by modification of
a commercially-available Gram Ria (Trade Mark) rotary freezer,
of the kind which possesses a freezing station for ice
confection mix, means for withdrawing frozen ice confection
by a stick or handle frozen into it (maybe facilitated by
flash heat), and subsequent enrobing and wrapping stations.

Such a machine or any equivalent thereof can be modified

0040989
Q.1031

or constructed by installing a mould-tooling arrangement in the place described above as that of the enrober. The tooling arrangement can be in any of the forms mentioned hereinabove. Alternatively, the wrapping station can be replaced by a tooling station, e.g. a half-mould-like tool on to which the frozen product blank is laid and on to which it is pressed, or where it can have a further tool applied to it from above.

We find that by such arrangements and embodiments we can produce ice confections of complex or re-entrant or protruding shape in a convenient manner well suited to production-line application.

It will be clear to the practised reader that a wide variety of modifications and variations can be introduced into the apparatus and processes described herein without departing from the scope of the invention. The confection blank can if desired be derived from an extrudate from a conventional ice cream freezer, e.g. at $-4^{\circ}C$ to $-5^{\circ}C$, which can suitably for example be hardened, e.g. at about $-18^{\circ}C$, before shaping.

Q.1051

0040989

Claims

1.  Apparatus for forming moulded edible products such as frozen confections, which comprises mould parts for pressing and reshaping an edible product piece between them, characterised in that the apparatus comprises means (Fig. 5: 1,3) for delivering an edible product piece (Fig. 5: 2) to a mould which is a box mould having decoratively contoured mould parts (Fig. 5: 4,5; Fig. 8-10, 10) and means (Fig. 5: 7) for conveying reshaped product pieces from the box mould.

2.  Apparatus according to claim 1, characterised in that the contoured mould parts (Fig. 8-10, 10) are provided with means (12) for ejecting reshaped edible product pieces therefrom.

3.  Apparatus according to claim 1, characterised in that the box mould rim wall (Figs. 1-3: 2) is decoratively contoured with a re-entrant shape.

4.  Apparatus according to claim 1 or 3, characterised in that a portion (Figs. 1-3: 4) of the box mould rim wall (Figs. 1-3: 2) is carried by a slidable wall piece (5) apertured (6) to receive a stick of an edible stick product during reshaping, to avoid stick breakage during moulding compression.

5.  A process of forming moulded edible products such as frozen confections, which comprises reshaping a preformed blank confection produce piece between shaped mould parts, characterised in that the blank is reshaped in a box mould (Fig. 1: 1-5).

6.  A process according to claim 5, characterised in that the box mould is as defined in any of claims 2-4.

0040989

Q.1031

7.    A process according to claim 5 or 6, characterised in that the blank confection piece is a water ice and the moulding pressure developed in the box mould is at least 5 bar, e.g. 60-100 bar, at about -10°C.

8.    A process according to claim 5 or 6, characterised in that the water ice blank has a sugar content of at least 10% and below 20%, or its equivalent, and the moulding pressure developed in the box mould is at least 60 bar.

9.    A process according to claim 5 or 6, characterised in that the water ice blank either has a sugar content of at least 20% or its equivalent, or is appreciably aerated, and the moulding pressure developed in the box mould is at least 5 bar.

10.    Ice confection moulding apparatus and processes substantially according to the accompanying description and drawings.

0040989

Fig.1. -

Fig.2.

Fig.3.

Fig.4.

*Fig.5.*

*Fig.6.*

0040989

**Fig.7.**

**Fig.8.**

**Fig.9.**

**Fig.10.**